# EUROPEAN PATENT APPLICATION

(11) **EP 4 675 946 A1**
(43) Date of publication of application: **07.01.2026**
(21) Application number: 24875672.8
(22) Date of filing: 11.07.2024
(51) Int. Cl.: H04J 3/06

(54) **TIME COMPENSATION METHOD AND SYSTEM FOR INTERFERENCE TEST DEVICE**

(30) Priority: 22.05.2024 CN 202410642768
(71) Applicant: Beijing Jingwei Hirain Technologies Co., Inc., Beijing 100015 (CN)
(72) Inventor: WANG, Ziyu, Chaoyang District, Beijing 100015 (CN); CUI, Hangtao, Chaoyang District, Beijing 100015 (CN); YANG, Ran, Chaoyang District, Beijing 100015 (CN); WANG, Yongting, Chaoyang District, Beijing 100015 (CN)
(74) Representative: Zacco Norway AS
(86) International application number: PCT/CN2024/104964
(87) International publication number: WO 2025/241280

(57) **Abstract**

The present disclosure provides a time compensation method and system for interference test equipment. The method includes: obtaining a first delay time and a second delay time; decomposing the first delay time and the second delay time to obtain a nanosecond scale delay time corresponding to the first delay time and a picosecond scale delay time corresponding to the second delay time; performing lead compensation for the nanosecond scale delay time by a configurable lead compensation and output module to obtain a nanosecond scale lead compensation time; performing lag compensation for the picosecond scale delay time by a delay compensation module to obtain a picosecond scale delay compensation time, and calculating a sum of the nanosecond scale lead compensation time and the picosecond scale delay compensation time to obtain a picosecond scale lead compensation time; and applying an interference signal on a controller area network, CAN, bus based on the picosecond scale lead compensation time. Therefore, by using a plurality of timing controllers connected in cascade in the delay compensation module, the picosecond scale delay compensation time is realized.

## Description

The present application claims priority to Chinese Patent Application No. 202410642768.2, titled "TIME COMPENSATION METHOD AND SYSTEM FOR INTERFERENCE TEST EQUIPMENT", filed on May 22, 2024 with the China National Intellectual Property Administration, which is hereby incorporated by reference in its entirety.

### FIELD

The present application relates to the technical field of vehicular communication test, and particularly to a time compensation method and system for interference test equipment.

### BACKGROUND

The vehicular CAN (FD) bus technology is a communication technology for monitoring and controlling various devices applied in the field of vehicular communication. The CAN (FD) bus technology includes a signal error handling mechanism, which can ensure the accuracy of the recognized logic level signal. Meanwhile, in order to ensure that the automotive electronic controller of the CAN (FD) bus technology can still maintain communication stability and accurate matching of sampling points in the bus interference scenario, the conventional technology uses the CAN (FD) bus interference test equipment to generate signal interference, so as to implement fault injection and sampling point testing.

However, a main chip of the interference test equipment is generally a microcontroller (MCU) or a field-programmable gate array (FPGA). Its operating clock frequency is up to 100 megahertz, and the clock cycle is at the nanosecond (ns) scale. As a result, the interference test equipment cannot achieve high-precision time compensation with a resolution lower than the nanosecond scale, and thus cannot guarantee the accuracy of the interference signal and the test error of the sampling point.

### SUMMARY

In view of this, it is provided according to the embodiment of the present disclosure a time compensation method and system for interference test equipment, so as to solve the problem in the conventional technology that high precision time compensation with a resolution lower than nanosecond scale cannot be realized.

To realize the above purpose, an embodiment of the present disclosure provides the following technical solutions.

In a first aspect of the embodiment of the present disclosure, a time compensation method for interference test equipment is disclosed. The method includes:
obtaining a first delay time and a second delay time;
decomposing the first delay time and the second delay time to obtain a nanosecond scale delay time corresponding to the first delay time and a picosecond scale delay time corresponding to the second delay time;
performing lead compensation for the nanosecond scale delay time by a configurable lead compensation and output module to obtain a nanosecond scale lead compensation time, wherein the configurable lead compensation and output module is composed of preset logic codes;
performing lag compensation for the picosecond scale delay time by a delay compensation module to obtain a picosecond scale delay compensation time, and calculating a sum of the nanosecond scale lead compensation time and the picosecond scale delay compensation time to obtain a picosecond scale lead compensation time, wherein the delay compensation module is composed of a plurality of timing controllers connected in cascade, and a delay adjustment on the picosecond scale delay time is performed using the plurality of timing controllers; and
applying an interference signal on a controller area network (CAN) bus based on the picosecond scale lead compensation time.

In an embodiment, the above time compensation method for interference test equipment also includes:
obtaining a bus parameter on the CAN bus;
obtaining a current acquired signal on the CAN bus at a current time based on the bus parameter;
parsing the current acquired signal to obtain an interference position of the current acquired signal on a CAN Receive (RX) signal line; and
applying a target interference signal on the CAN bus according to the interference position.

In an embodiment, in the time compensation method for the interference test equipment described above, the obtaining the current acquired signal on the CAN bus at the current time based on the bus parameter includes:
extracting a baud rate and a sampling point of the CAN bus from the bus parameter;
searching for a basic parameter of CAN with Flexible Data rate (CAN FD), communication corresponding to the baud rate and the sampling point from a preset table; and
obtaining the current acquired signal at the current time from the CAN bus according to the basic parameter of CAN FD communication.

In an embodiment, in the time compensation method for the interference test equipment described above, after the applying the interference signal on the CAN bus based on the picosecond scale lead compensation time, the method further includes:
determining a turned-on time of a transistor switch as a delay compensation time of the CAN bus, when the interference signal is at a high level; and
determining a total delay time as a delay compensation time of the CAN bus, when the interference signal is at a low level, wherein the total delay time indicates a sum of a delay time from a CAN Physical layer (PHY) bus to a CAN RX signal line and a delay time from the CAN Transmit (TX) signal line to the CAN PHY bus.

In an embodiment, the above time compensation method for interference test equipment further includes:
obtaining the picosecond scale delay compensation time; and
dividing equally the picosecond scale delay compensation time according to a preset threshold to obtain a plurality of divided delay times for transmission to the plurality of timing controllers.

In an embodiment, the above time compensation method for interference test equipment further includes:
obtaining a temperature and a voltage, and a number of taps corresponding to the picosecond scale delay compensation time;
calibrating the temperature and the voltage by an IDELAYCTRL unit in the delay compensation module; and
adjusting the number of taps corresponding to the picosecond scale delay compensation time based on the calibrated temperature and voltage, in a way such that the delay time is the same for all timing controller units in the delay compensation module.

In an embodiment, in the time compensation method for the interference test equipment described above, the performing the lead compensation for the nanosecond scale delay time by the configurable lead compensation and output module to obtain the nanosecond scale lead compensation time comprises:
obtaining a frequency of a system clock and a position on the CAN bus at a current time; and
performing a nanosecond beat for the nanosecond scale delay time by the configurable lead compensation and output module based on the frequency and the position, to obtain the nanosecond scale lead compensation time.

In an embodiment, in the time compensation method for interference test equipment described above, the performing the lag compensation for the picosecond scale delay time by the delay compensation module to obtain the picosecond scale delay compensation time comprises:
obtaining a system clock, a nanosecond scale lead compensation time and a user configurable delay parameter;
calculating a picosecond scale delay value by a delay tap number allocation module of the delay compensation module using the user configurable delay parameter; and
performing picosecond adjustment on the picosecond scale delay time by each timing controller in the delay compensation module based on the system clock, the nanosecond scale lead compensation time and the picosecond scale delay value, to obtain the picosecond scale delay compensation time.

A second aspect of the embodiment of the present disclosure discloses a time compensation system for interference test equipment, including:
a user configuration parameter parsing module, configured to obtain a first delay time and a second delay time, and is configured to decompose the first delay time and the second delay time to obtain a nanosecond scale delay time corresponding to the first delay time and a picosecond scale delay time corresponding to the second delay time;
a configurable lead compensation and output module, configured to perform lead compensation for the nanosecond scale delay time to obtain a nanosecond scale lead compensation time, wherein the configurable lead compensation and output module is composed of preset logic codes; and
a delay compensation module, configured to perform lag compensation for the picosecond scale delay time to obtain a picosecond scale delay compensation time, calculate a sum of the nanosecond scale lead compensation time and the picosecond scale delay compensation time to obtain a picosecond scale lead compensation time, and apply an interference signal on a CAN bus based on the picosecond scale lead compensation time, wherein the delay compensation module is composed of a plurality of timing controllers connected in cascade, and a delay adjustment on the picosecond scale delay time is performed using the plurality of timing controllers.

In an embodiment, the above time compensation system for interference test equipment is also used in the following aspects:
the user configuration parameter parsing module is configured to obtain a bus parameter on the CAN bus, and obtain a current acquired signal on the CAN bus at a current time based on the bus parameter;
the system further comprises a parsing module configured to parse the current acquired signal to obtain an interference position of the current acquired signal on a CAN Receive (RX) signal line; and
the delay compensation module is configured to apply a target interference signal on the CAN bus according to the interference position.

In an embodiment, in the time compensation system for interference test equipment described above, when the user configuration parameter parsing module obtains the current acquired signal on the CAN bus at the current time based on the bus parameter, the user configuration parameter parsing module is specifically configured to:
extract a baud rate and a sampling point of the CAN bus from the bus parameter;
search for a basic parameter of CAN FD communication corresponding to the baud rate and the sampling point from a preset table; and
obtain the current acquired signal at the current time from the CAN bus according to the basic parameter of CAN FD communication.

In an embodiment, the above time compensation system for interference test equipment is also used in the following aspects:
the delay compensation module is configured to determine a turned-on time of a transistor switch as a delay compensation time of the CAN bus, when the interference signal is at a high level; and
the delay compensation module is configured to determine a total delay time as a delay compensation time of the CAN bus, when the interference signal is at a low level, wherein the total delay time indicates a sum of a delay time from a CAN PHY bus to a CAN RX signal line and a delay time from the CAN TX signal line to the CAN PHY bus.

In an embodiment, the above time compensation system for interference test equipment is also used in the following aspects:
the delay compensation module is configured to obtain the picosecond scale delay compensation time; and divide equally the picosecond scale delay compensation time according to a preset threshold to obtain a plurality of divided delay times for transmission to the plurality of timing controllers.

In an embodiment, the above time compensation system for interference test equipment is also used in the following aspects:
the delay compensation module is configured to obtain a temperature and a voltage , and a number of taps corresponding to the picosecond scale delay compensation time; calibrate the temperature and the voltage by an IDELAYCTRL unit in the delay compensation module; and adjust the number of taps corresponding to the picosecond scale delay compensation time based on the calibrated temperature and voltage, in a way such that the delay time is the same for all timing controller units in the delay compensation module.

In an embodiment, in the time compensation system for interference test equipment described above, when the configurable lead compensation and output module performs the lead compensation for the nanosecond scale delay time to obtain the nanosecond scale lead compensation time, the configurable lead compensation and output module is specifically configured to:
obtain a frequency of a system clock and a position on the CAN bus at a current time; and
perform a nanosecond beat for the nanosecond scale delay time by the configurable lead compensation and output module based on the frequency and the position, to obtain the nanosecond scale lead compensation time.

In an embodiment, in the time compensation system for interference test equipment described above, when the delay compensation module performs the lag compensation for the picosecond scale delay time to obtain the picosecond scale delay compensation time, the delay compensation module is specifically configured to:
obtain a system clock, a nanosecond scale lead compensation time and a user configurable delay parameter;
calculate a picosecond scale delay value by a delay tap number allocation module of the delay compensation module using the user configurable delay parameter; and
perform picosecond adjustment on the picosecond scale delay time by each timing controller in the delay compensation module based on the system clock, the nanosecond scale lead compensation time and the picosecond scale delay value, to obtain the picosecond scale delay compensation time.

Based on the time compensation method for interference test equipment in the embodiment of the present disclosure, a first delay time and a second delay time are obtained, the first delay time and the second delay time are decomposed to obtain a nanosecond scale delay time corresponding to the first delay time and a picosecond scale delay time corresponding to the second delay time, lead compensation for the nanosecond scale delay time is performed by the configurable lead compensation and output module to obtain a nanosecond scale lead compensation time, and lag compensation for the picosecond scale delay time is performed by the delay compensation module to obtain a picosecond scale delay compensation time, and a sum of the nanosecond scale lead compensation time and the picosecond scale delay compensation time is calculated to obtain the picosecond scale lead compensation time. The delay compensation module is composed of a plurality of timing controllers connected in cascade, and finally, an interference signal is applied on the CAN bus based on the picosecond scale lead compensation time. Consequently, by using the plurality of timing controllers connected in cascade in the delay compensation module, the picosecond scale delay compensation time is realized, such that the interference signal applied on the CAN bus can realize the accuracy with picosecond resolution.

### BRIEF DESCRIPTION OF THE DRAWINGS

The accompany drawings used in the description of the embodiments of the present disclosure or conventional technology will be described briefly as follows, so that the technical solutions according to the embodiments or conventional technology will become more apparent. It is clear that the accompany drawings in the following description are only embodiments of the present disclosure. For those skilled in the art, other accompany drawings may be obtained from these provided accompany drawings without any creative work.
FIG. 1 is a structural diagram of a time compensation system according to an embodiment of the present disclosure;
FIG. 2 is a time compensation waveform diagram of CAN(FD) interference signal according to an embodiment of the present disclosure;
FIG. 3 is a flow diagram of a time compensation method for interference test equipment according to an embodiment of the present disclosure;
FIG. 4 is a flow diagram of a method for obtaining nanosecond scale lead compensation time according to another embodiment of the present disclosure;
FIG. 5 is a structural diagram of a delay compensation module according to an embodiment of the present disclosure;
FIG. 6 is a flow diagram of a method for obtaining picosecond scale delay compensation time according to another embodiment of the present disclosure;
FIG. 7 is a flow diagram of a calibration method for delay compensation time according to another embodiment of the present disclosure;
FIG. 8 is a flow diagram of a processing method of a temperature and a voltage according to another embodiment of the present disclosure;
FIG. 9 is a flow diagram of an application method of an interference signal according to another embodiment of the present disclosure;
FIG. 10 is a flow diagram of a method for obtaining a current acquired signal according to another embodiment of the present disclosure; and
FIG. 11 is a structural diagram of a time compensation system for interference test equipment according to another embodiment of the present disclosure.

### DETAILED DESCRIPTION

The technical solutions according to the embodiments of the present disclosure will be described clearly and completely as follows in conjunction with the accompany drawings in the embodiments of the present disclosure. It is apparent that the described embodiments are only a part of the embodiments, not all of the embodiments according to the present disclosure. All the other embodiments obtained by those skilled in the art based on the embodiments in the present disclosure without any creative work fall within the scope of the present disclosure.

In the present disclosure, terms of "include", "comprise" or any other variants thereof are intended to be non-exclusive. Therefore, a process, method, article or device including a series of elements includes not only those elements but also other elements that are not enumerated, or also includes the elements inherent for the process, method, article or device. Unless expressively limited otherwise, an element defined by the statement "comprising (including) one..." does not exclude the existence of other similar elements in the process, method, article or device including the element.

A time compensation method for interference test equipment is provided in the embodiment of the present disclosure, which is applied to a time compensation system to solve the problem that high precision time compensation with a resolution lower than nanosecond scale cannot be realized in the conventional technology.

The time compensation system includes the internal custom logic in the field-programmable gate array (FPGA) and a plurality of timing controller units connected in a combined and cascading manner, which can achieve high-precision time compensation with a resolution on the picosecond scale, ensure the accuracy of applying an interference signal, and reduce the test error of sampling points.

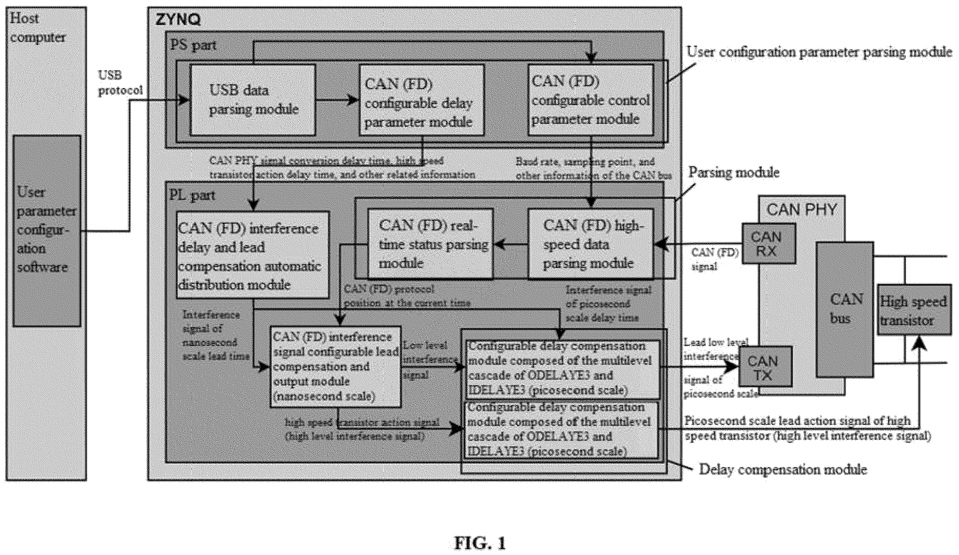

In an embodiment, as shown in FIG. 1, the embodiment of the present disclosure provides a time compensation system comprising a host computer, a ZYNQ chip, and a CAN PHY chip.

The host computer is used to speed up the data transmission rate, and in the process of transmitting a signal on the CAN bus, it may transmit and compress control parameters required by multiple boards and the signal according to the communication protocol between the host computer and the ZYNQ chip.

The ZYNQ chip is based on FPGA and ARM processors. It integrates FPGA and ARM processor cores into the same chip, which has powerful hardware acceleration and flexible software processing capabilities. The ZYNQ chip includes a Processing System (PS) part and a Programmable Logic (PL) part, where the PL part refers to an FPGA controller inside the ZYNQ chip and the PS part refers to an ARM controller inside the ZYNQ chip.

The PS part includes a user configuration parameter parsing module, and the PL part includes a parsing module, a CAN (FD) interference delay and lead compensation automatic distribution module, a CAN (FD) interference signal configurable lead compensation and output module, and a delay compensation module composed of the multilevel cascade of ODELAYE3 and IDELAYE3, where both ODELAYE3 and IDELAYE3 are timing controllers used for time delay adjustment on the picosecond scale.

The user configuration parameter parsing module may include a USB data parsing module, a CAN (FD) configurable delay parameter module, and a CAN (FD) configurable control parameter module. Specifically, the USB data parsing module is configured to reversely parse the USB CDC serial port data into the control parameters required by multiple boards, that is, parsed data described in the following embodiments, based on the communication protocol between the host computer and the ZYNQ.

The CAN (FD) configurable delay parameter module is configured to send the parsed data into the CAN (FD) interference delay and lead compensation automatic distribution module in the PL part via an AXI bus inside the ZYNQ when the parsed data is delay time.

The CAN (FD) configurable control parameter module is configured to send the parsed data into the high-speed parsing module in the PL part via the AXI bus inside the ZYNQ when the parsed data is a parameter.

The parsing module includes a CAN (FD) data high-speed parsing module and a CAN (FD) real-time status parsing module. The CAN (FD) data high-speed parsing module is configured to parse a parameter to obtain a value corresponding to the parameter, and send it to the CAN (FD) real-time status parsing module. The CAN (FD) real-time status parsing module is configured to parse a position of a signal in the CAN (FD) protocol according to the value corresponding to the parameter.

The CAN (FD) interference delay and lead compensation automatic distribution module is configured to allocate a delay time to the CAN (FD) interference signal configurable lead compensation and output module and the delay compensation module respectively.

The CAN (FD) interference signal configurable lead compensation and output module is configured to process the delay time to obtain a lead compensation interference signal (160MHz ≥ f ≥ 16MHz) of a nanosecond scale, whose resolution is not higher than the FPGA internal system clock frequency.

The delay compensation module composed of the multilevel cascade of ODELAYE3 and IDELAYE3 is configured to combine the lead compensation interference signal of the nanosecond scale and a lag compensation signal of a picosecond scale provided by itself, so as to apply an interference signal with a resolution on the picosecond scale on the CAN (FD).

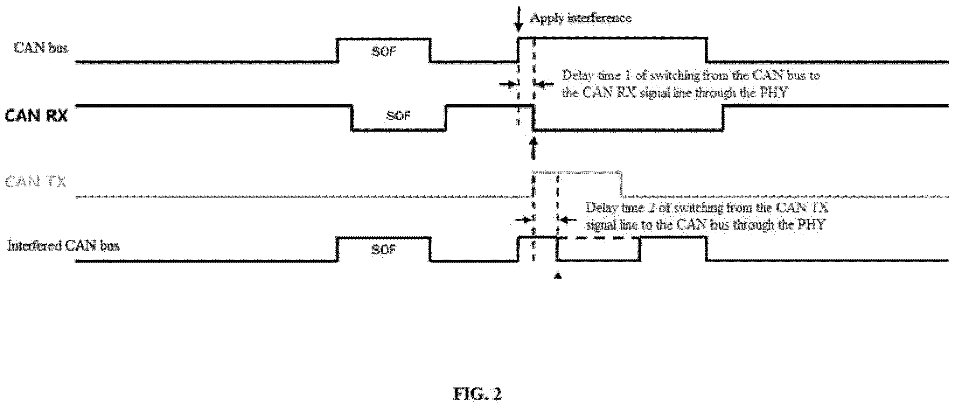

The CAN PHY chip includes a CAN TX signal line, a CAN RX signal line and a CAN bus. In the flow of signals, the CAN (FD) message signal is switched from the CAN bus through the PHY chip to the CAN RX signal line, and the interference signal applied subsequently is switched from the CAN TX signal line through the PHY chip to the CAN bus, there is a signal switching delay time. Therefore, the CAN (FD) message signal is converted into the host computer by the PHY chip, and the host computer sends the CAN (FD) message signal to the ZYNQ chip through USB protocol to determine a picosecond scale delay compensation time. Then, based on the delay time, the interference signal is transmitted to the CAN TX signal line and is applied to the CAN bus through the PHY chip. Specifically, a time compensation waveform diagram of the CAN (FD) interference signal is shown in FIG. 2.

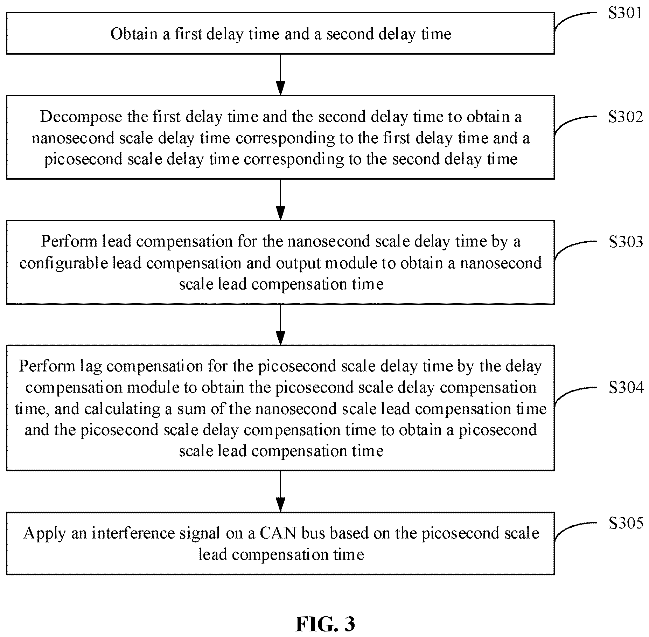

As shown in FIG. 3, a time compensation method for interference test equipment in an embodiment of the present disclosure specifically includes the following steps.

S301: a first delay time and a second delay time are obtained.

The CAN (FD) message signal is switched from the CAN bus through the PHY chip to the CAN RX signal line, and the interference signal is switched from the CAN TX signal line through the PHY chip to the CAN bus, there is a signal switching delay time. Therefore, it is desired to acquire the delay time so that the signal switching delay time can be compensated when the interference signal is applied on the CAN bus subsequently. In the embodiment of the present disclosure, a current acquisition signal is parsed by the high-precision oscilloscope, so as to determine a delay time (a nanosecond-scale error) of the current acquisition signal switched from the CAN bus through the PHY chip to the CAN RX signal line, i.e., the first delay time, and a delay time (a picosecond-scale error) of the interference signal switched from the CAN TX signal line through the PHY chip to the CAN bus, i.e., the second delay time.

S302: the first delay time and the second delay time are decomposed to obtain a nanosecond scale delay time corresponding to the first delay time and a picosecond scale delay time corresponding to the second delay time, respectively.

After the first delay time and the second delay time are obtained by the high-precision oscilloscope, these two delay time are transmitted by a host computer interface program using the USB protocol, to a USB data parsing module in a PS part of a ZYNQ chip for decomposition.

Specifically, the first delay time is decomposed by using an FPGA basic logic inside the system, to obtain the nanosecond scale delay time corresponding to the first delay time. The second delay time is decomposed by using an FPGA primitive logic inside the system, to obtain the picosecond scale delay time corresponding to the second delay time.

S303: lead compensation for the nanosecond scale delay time is performed by a configurable lead compensation and output module, to obtain a nanosecond scale lead compensation time.

The configurable lead compensation and output module is composed of preset logic codes.

Specifically, the lead compensation for the nanosecond scale delay time is performed by an FPGA internal custom logic in the configurable lead compensation and output module to obtain the nanosecond scale lead compensation time, that is, a nanosecond scale lead compensation time obtained by beating the nanosecond delay time by the FPGA internal system clock.

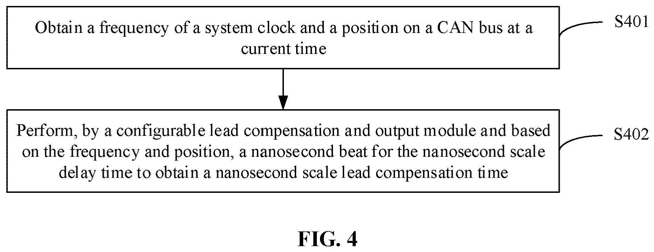

In another embodiment of the present disclosure, as shown in FIG. 4, a specific implementation of step S303 includes the following steps.

S401: a frequency of a system clock and a position on a CAN bus at a current time are obtained.

In order for the configurable lead compensation and output module to accurately output the nanosecond scale lead compensation time subsequently, it is desired to obtain the clock frequency of the system and the position on the CAN bus at the current time in advance, so that the configurable lead compensation and output module can output the nanosecond scale lead compensation time according to the frequency and position. Specifically, the frequency of the system clock may be acquired by "QueryPerformanceFrequency" function on the Windows platform. The frequency of the system clock may be acquired by "clock_getres" function on the Linux platform, and the use of programming languages is also an available way. There is no limit to how the frequency of the system clock can be obtained in this embodiment of the present disclosure, which can be set as required. Furthermore, by using the appropriate CAN bus communication library or drive program, the position on the CAN bus at the current time can be encapsulated as a CAN message, which can be sent out through the CAN bus, so that the position on the CAN bus at the current time can be obtained.

S402: a nanosecond beat for the nanosecond scale delay time is performed by a configurable lead compensation and output module based on the frequency and position, to obtain a nanosecond scale lead compensation time.

Specifically, based on the frequency and position, the nanosecond beat for the nanosecond scale delay time is performed by invoking an FPGA internal system clock by the configurable lead compensation and output module, to obtain a nanosecond scale lead compensation time.

S304: lag compensation for the picosecond scale delay time is performed by a delay compensation module to obtain a picosecond scale delay compensation time, and a sum of the nanosecond scale lead compensation time and the picosecond scale delay compensation time is calculated to obtain a picosecond scale lead compensation time.

The delay compensation module is composed by cascaded connection of a plurality of timing controllers, and the plurality of timing controllers are used to adjust the picosecond scale delay time.

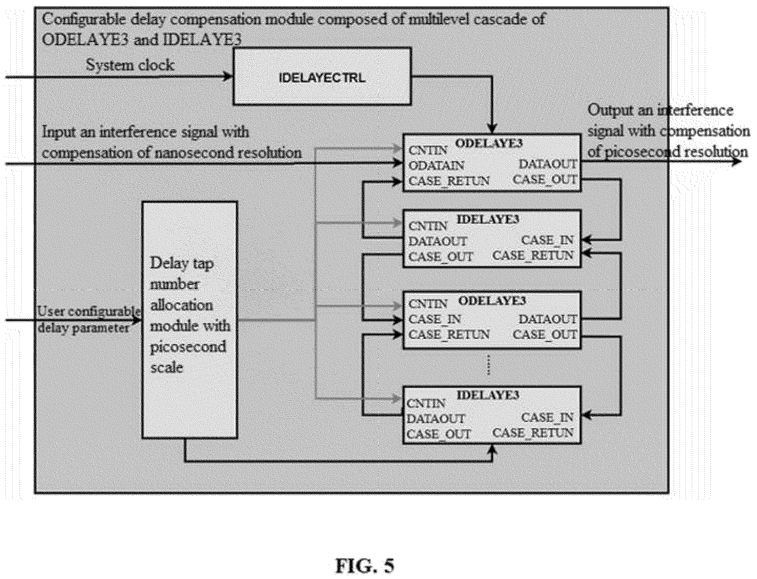

A structural diagram of the delay compensation module is shown in FIG. 5. Specifically, the delay compensation module shown in FIG. 5 is constructed by multiple ODELAYE3, IDELAYE3 and IDELAYCTRL. A CASC_OUT interface in the IDELAYE3 and ODELAYE3 is connected to a CASC_IN interface of a next level, and the DATAOUT interface is connected to a CASC_RETURN interface of a previous level, so that a multi-level cascade is formed through this connection method. Consequently, a high-speed signal link inside the FPGA is constructed to form the final delay chain. In the multi-level cascaded delay chain, the attribute of the first level ODELAYE3 unit is MASTER, which is used to control the output of the final delay signal; the attribute of IDELAYE3 and ODELAYE3 units in the middle of the delay link is SLAVE_MIDDLE; and the attribute of IDELAYE3 or ODELAYE3 unit at the end of the delay link is SLAVE_END. This high-speed delay link inside the FPGA constructed by the above units provides a larger adjustable delay range for the first level ODELAYE3 unit, so that the lag compensation for the picosecond scale delay time is performed by the delay compensation module to obtain a delay compensation time with a resolution on the picosecond scale.

When applying an interference signal to the CAN bus subsequently, it is desired to calculate the appropriate time to apply the interference signal on the CAN bus in advance for specific testing, security assessment, or attack detection. Hence, the nanosecond scale lead compensation time and picosecond scale delay compensation time are combined by the delay compensation module to obtain the picosecond scale lead compensation time, so that the solution of time compensation with a resolution on the picosecond scale on the CAN (FD) interference test equipment can be realized.

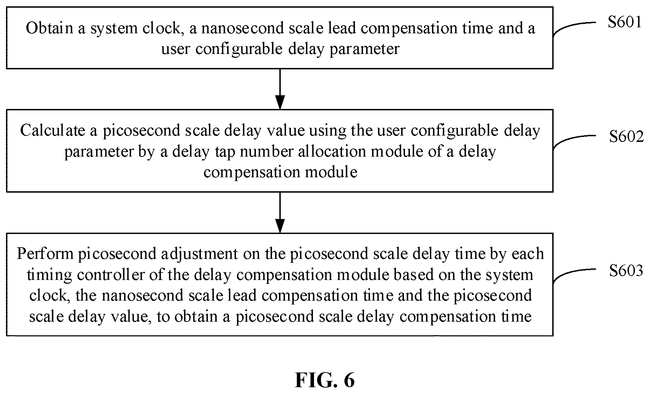

In another embodiment of the present disclosure, a specific implementation of step S304 includes the following steps as shown in FIG. 6.

S601: a system clock, a nanosecond scale lead compensation time and a user configurable delay parameter are obtained.

The user configurable delay parameter is used to calculate the picosecond scale delay value subsequently, so that the picosecond scale delay value can be used to determine a delay value of the picosecond scale delay time.

In an embodiment, an API function or a third-party library provided by an operating system can be used to obtain the system clock. A configuration interface can be provided to the user for setting delay parameters, which may include delay time to be compensated, a compensation strategy (such as static compensation or dynamic compensation), a source of a compensation value (such as input from the user or measured by a sensor), a unit of a compensation value (such as in a nanosecond, microsecond, etc.), and so on.

S602: a picosecond scale delay value is calculated by using the user configurable delay parameter by a delay tap number allocation module of the delay compensation module.

Specifically, a delay compensation algorithm can be designed according to the delay parameter configured by the user in the delay tap number allocation module in the delay compensation module, so that the delay compensation can be realized on the picosecond scale, and then the delay value is calculated according to the delay compensation algorithm.

The specific delay compensation algorithm may as follows:
Input parameters: user configurable delay parameters
delay time set by the user (in a unit of picosecond)
delay compensation strategy (static or dynamic)
source of delay value (such as input from the user, measured by the sensor, or the like).
Static delay compensation:
   the delay time set by the user is directly used as the delay compensation value if the delay compensation strategy is static compensation.
Dynamic delay compensation:
   a delay value is obtained in real time according to the source of the delay value and converted to a picosecond scale delay value if the delay compensation strategy is dynamic compensation.
The delay value measured by the sensor or other real-time data can be used to calculate the dynamic delay compensation value.
Calculation of the picosecond scale delay value:
   The delay time set by the user is added to the static or dynamic delay compensation value to obtain the final picosecond scale delay value.
Output: the picosecond scale delay value.

This is just an example of the delay compensation algorithm.

S603: based on the system clock, the nanosecond scale lead compensation time and the picosecond scale delay value, picosecond adjustment on the picosecond scale delay time is performed by each timing controller in the delay compensation module, to obtain a picosecond scale delay compensation time.

Each timing controller is configured to receive the system clock signal, the picosecond scale delay value and the nanosecond scale lead compensation time. Based on the received system clock signal, the picosecond scale delay value and the nanosecond scale lead compensation time, the delay in each timing controller is adjusted to achieve picosecond scale delay compensation for the picosecond scale delay time.

Specifically, the picosecond scale delay compensation time can be realized by means of the hardware in the delay compensation module and the wiring layout of each timing controller.

S305: an interference signal is applied on the CAN bus based on the picosecond scale lead compensation time.

Specifically, it is necessary to apply the interference signal on CAN bus a certain time in advance, so as to offset the delay compensation time inside the CAN bus subsequently and guarantee the accuracy of applying the interference signal to some extent. Therefore, based on the advance time, the interference signal with a set delay compensation time is applied on the CAN bus to realize the picosecond scale lead compensation of the interference signal.

For instance, the system intends to apply an interference signal at the ACK SLOT position on the CAN bus. Nevertheless, there is a certain nanosecond scale delay time and picosecond scale delay time (for example, a delay time of 65.15 nanoseconds) during signal switching or transistor operation in the CAN PHY. It is possible to apply the interference signal ahead of time to guarantee the accuracy of applying the interference signal. By summing up the nanosecond scale lead compensation time and the picosecond scale delay compensation time, a value of 65.15 nanoseconds (picosecond scale lead compensation time) is obtained. At this point, the system needs to apply the interference signal 65.15 nanoseconds in advance on the CAN TX signal line. The interference signal can be applied at the starting position of the ACK SLOT on the CAN bus after being switched by the CAN PHY.

The application of interference signal on the CAN bus is based on the level required by the CAN bus. Hence, the interference signal can be at either a high level or a low level.

In an embodiment, after the application of interference signal on the CAN bus, a delay compensation time will be generated within the CAN bus according to the level value of the interference signal. Therefore, after the execution of step S305, a method for determining a delay compensation time is provided in another embodiment of the present disclosure, which specifically includes the following steps.

When the interference signal is at a high level, the delay compensation time of the CAN bus is determined to be a turned-on time of a transistor switch.

When the applied interference signal is at a high level, the transistor will be turned on inside the CAN bus, and the turned-on time of the transistor switch is the delay compensation time of the CAN bus. Also, the picosecond scale lead compensation time is used to offset the turned-on time of the transistor switch, so as to guarantee the accuracy of applying the interference signal. Hence, the interference signal of high level is applied to the high-speed transistor in the CAN bus.

When the interference signal is at a low level, the delay compensation time of the CAN bus is determined to be a total delay time.

The total delay time refers to a sum of a delay time from the CAN PHY bus to the CAN RX signal line and a delay time from the CAN TX signal line to the CAN PHY bus.

When the interference signal is at a low level, the delay time from the CAN PHY bus to the CAN RX signal line and the delay time from the CAN TX signal line to the CAN PHY bus need to be taken into account, to ensure that the interference signal can interfere with the CAN (FD) waveform being sent on the CAN bus in the appropriate time, causing it to generate an error frame. Hence, the delay compensation time of the CAN bus is the sum of the delay time from the CAN PHY bus to the CAN RX signal line and the delay time from the CAN TX signal line to the CAN PHY bus, when the interference signal is at a low level. In this way, the low-level interference signal is applied to the CAN TX signal line, and then the interference signal applied to the CAN TX signal line is converted by the CAN PHY chip to the interference signal applied to the CAN bus.

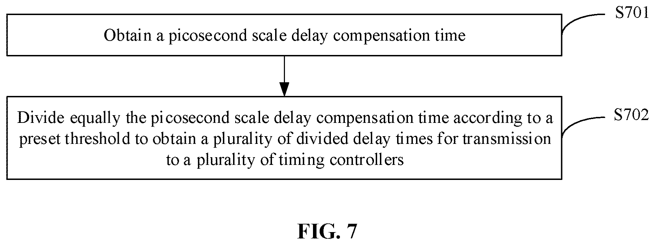

In an embodiment, it is possible to calibrate the picosecond scale delay compensation time generated by the delay compensation module so as to ensure the accuracy of time compensation of the overall system. In another embodiment of the present disclosure, a calibration method of delay compensation time is provided, as shown in FIG. 7, which specifically includes the following steps.

S701: a picosecond scale delay compensation time is obtained.

S702: according to a preset threshold, the picosecond scale delay compensation time is divided equally to obtain a plurality of divided delay times for transmission to a plurality of timing controllers.

Specifically, in order to realize more precise interference delay control in the system, the system is more flexible when performing delay compensation, and the delay time can be adjusted in a smaller step so that the arrival time of the interference signal is controlled more precisely. Therefore, the method of time segmentation is adopted in the embodiment of the present disclosure. According to a preset threshold n, the picosecond scale delay compensation time is equally divided into n parts, each of which has a fixed delay (1000/(nf)) ps, thus ensuring the accuracy of time compensation of the overall system.

For instance, assuming that the nanosecond scale delay time is 65.15 nanoseconds, a time corresponding to 65.15 nanoseconds is 6.25 nanoseconds due to 160 MHz clock frequency used by the FPGA. The lead compensation time in multiple of 6.25 nanoseconds can be realized by the FPGA internal custom logic of the configurable lead compensation and output module in the FPGA. In this example, the lead compensation time in multiple of 6.25 nanoseconds is 68.75 nanoseconds (since the delay compensation module can only generate delay compensation, but not lead compensation, the lead compensation time provided by the configurable lead compensation and output module must be longer than an actual required compensation time). At this time, the delay compensation module also generates a delay of 3.6 nanoseconds obtained by subtracting 65.15 nanoseconds from 68.75 nanoseconds. A number of delay times after equally division into n parts in the multilevel cascaded units of IDELAYE3 and ODELAYE3 in the delay compensation module can be adjusted, to find a delay value closest to 3.6 nanoseconds, so as to finally achieve the picosecond scale delay compensation time.

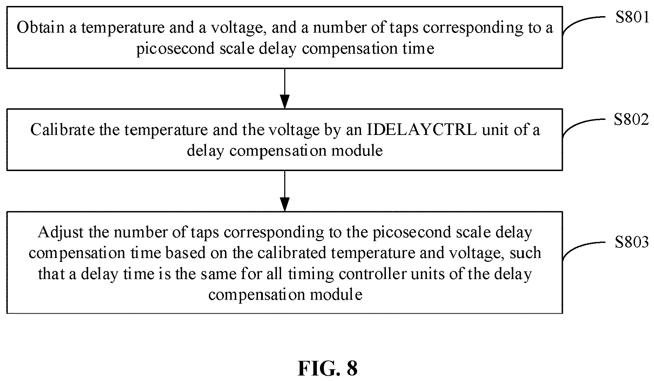

In an embodiment, it is desired to process a temperature and a voltage so that the delay time generated by each timing controller in the delay compensation module is the same in different environments. As shown in FIG. 8, a method of processing the temperature and voltage is provided in another embodiment of the present disclosure, which specifically includes the following steps.

S801: a temperature, a voltage and a number of taps corresponding to a picosecond scale delay compensation time are obtained.

In order to dynamically adjust each timing controller in the delay compensation module according to change in the temperature and voltage in the current environment to maintain the stability and performance of the system, it is necessary to obtain the temperature and voltage and the number of taps corresponding to the picosecond scale delay compensation time in advance.

S802: the temperature and the voltage are calibrated by an IDELAYCTRL unit in the delay compensation module.

Specifically, since the change in temperature and voltage may affect the working speed and performance inside the chip and thus the accuracy of the delay unit, the IDELAYCTRL unit in the delay compensation module is used to calibrate the temperature and voltage, which can ensure the stability of delay accuracy of the system.

S803: the number of taps corresponding to the picosecond scale delay compensation time is adjusted based on the calibrated temperature and voltage so that the delay time is the same for all timing controller units in the delay compensation module.

Specifically, the number of taps required for the picosecond scale delay compensation time can be determined according to the calibrated temperature and voltage. Then, according to the determined number of taps, the number of taps corresponding to the picosecond scale delay compensation time generated by each timing controller can be adjusted, so that the required picosecond scale delay compensation time is acquired and the picosecond scale delay compensation time generated by each timing controller is the same.

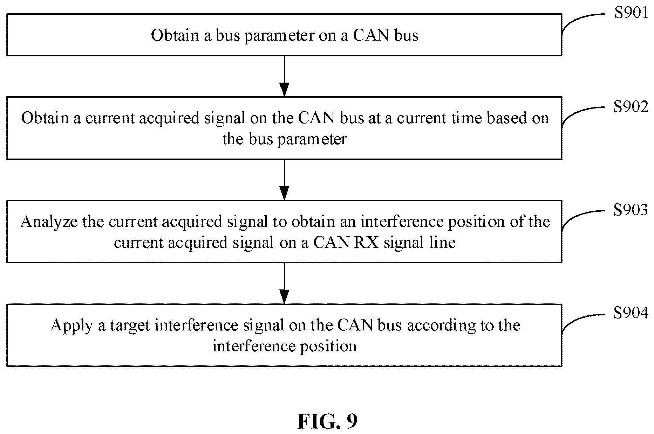

In an embodiment, in addition to applying the interference signal on the CAN bus in advance based on the picosecond scale lead compensation time, it is also possible to find an accurate interference position on the CAN bus to apply the interference signal. In another embodiment of the present disclosure, a method for applying the interference signal is provided, as shown in FIG. 9, which specifically includes the following steps.

S901: a bus parameter on the CAN bus is obtained.

In order to reduce the measurement error of the sampling point of CAN (FD) by applying interference signal at the position where the signal is collected in the subsequent measurement process of CAN (FD) sampling point, the bus parameter on the CAN bus is needed to be obtained from the host computer by the USB protocol. The bus parameter of CAN (FD) can provide wider bandwidth and better flexibility, real-time performance and reliability, so that the current acquired signal on the CAN bus at the current time can be obtained effectively subsequently.

S902: the current acquired signal on the CAN bus at the current time is obtained based on the bus parameter.

Specifically, the CAN interface device is firstly connected to the CAN bus required to be monitored. The CAN interface device may be a CAN (FD) interface card, a USB-to-CAN adapter or a CAN interface module on an embedded system. Then, the CAN interface device is initialized using the corresponding programming library or driver, and the logic of acquiring for the CAN bus is set in the program to read the acquired signal from the CAN bus. Finally, the acquired signal on the CAN bus at the current time is obtained based on the bus parameter.

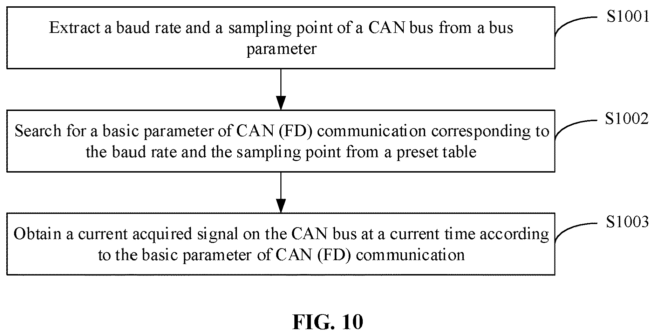

In another embodiment of the present disclosure, as shown in FIG. 10, a specific implementation of step S902 includes the following steps.

S1001: a baud rate and sampling point of the CAN bus are extracted from the bus parameter.

The bus parameter contains the data on the CAN bus, but not all of the data can be used to acquire data on the CAN bus. Therefore, in order to flexibly and quickly acquire the data on the CAN bus subsequently, the parameter(s) conducive to signal acquisition are extracted from the bus parameter in advance, i.e., the baud rate and sampling point of the CAN bus.

S1002: a basic parameter of CAN (FD) communication corresponding to the baud rate and the sampling point is searched from a preset table.

The parameter(s) required in the CAN protocol, i.e., the basic parameter(s) of CAN (FD) communication, are recorded by building a table. Due to the specific relationship between the baud rate, sampling point and interference parameters, the corresponding basic parameter of CAN (FD) communication can be found from the table according to the baud rate and sampling point. Then, the current acquired signal at the current time can be acquired from the CAN bus based on the basic parameter of CAN (FD) communication. The basic parameter of CAN (FD) communication may include TSEG1, TSEG2 and SJW. According to the CAN protocol, TSEG1 represents a time of a synchronization segment, TSEG2 represents a time of a post-segment, and SJW represents the resynchronization jump width.

S1003: a current acquired signal at a current time is obtained from the CAN bus according to the basic parameter of CAN (FD) communication.

Specifically, the current acquired signal at the current time is acquired from the CAN bus based on TSEG1, TSEG2 and SJW.

S903: the current acquired signal is parsed to obtain an interference position of the current acquired signal on a CAN RX signal line.

Specifically, the current acquired signal contains a lot of data on the CAN (FD) bus, such as IP address, port, signal position on the bus, etc. Therefore, the CAN (FD) real-time status parsing module is configured to parse, from the current acquired signal, which bit of the CAN (FD) protocol in which a CAN (FD) message where the current acquired signal is located at the current time is, a number of clock slice in the current bit, and a compensation width of soft synchronization. Thus, the interference position of the current acquired signal on the CAN RX signal line at the current time can be obtained.

S904: a target interference signal is applied on the CAN bus according to the interference position.

Specifically, the interference position of the target interference signal on the CAN bus is firstly determined. Then the target interference signal with picosecond resolution is sent to the CAN bus by the delay compensation module so that the target interference signal can be applied to the interference position on the CAN bus. Thus, the delay time compensation with picosecond resolution can be realized by the cascading connection in the delay compensation module, and the interference signal applied at the interference position on the CAN bus can also realize the accuracy with picosecond resolution.

The target interference signal can be at a high level or a low level, and for the specific explanations, the specific implementation of the method for determining the delay compensation time, as recited above, may be referred to, which will not be described here.

The present disclosure provides a time compensation method of interference test equipment, in which a first delay time and a second delay time are obtained, the first delay time and the second delay time are decomposed to obtain a nanosecond scale delay time corresponding to the first delay time and the picosecond scale delay time corresponding to the second delay time, lead compensation for the nanosecond scale delay time is performed by a configurable lead compensation and output module to obtain a nanosecond scale lead compensation time, lag compensation for the picosecond scale delay time is performed by the delay compensation module to obtain the picosecond scale delay compensation time, and a sum of the nanosecond scale lead compensation time and the picosecond scale delay compensation time is calculated to obtain a picosecond scale lead compensation time. The delay compensation module is composed by cascaded connection of a plurality of timing controllers, and the interference signal is applied on the CAN bus based on the picosecond scale lead compensation time. Consequently, the picosecond scale delay compensation time is realized by cascaded connection of the plurality of timing controllers in the delay compensation module, so that the interference signal applied on the CAN bus can realize the accuracy with picosecond resolution.

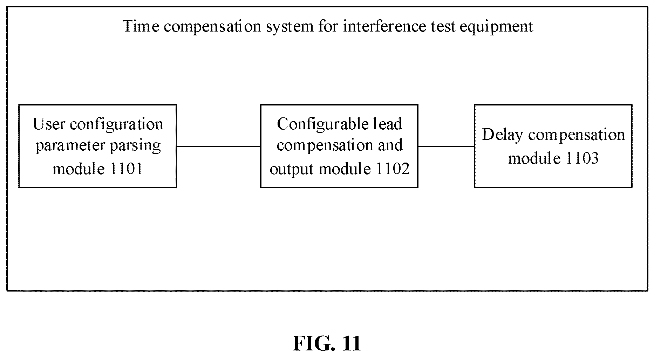

Another embodiment of the present disclosure provides a time compensation system for interference test equipment. As shown in FIG. 11, the time compensation system includes a user configuration parameter parsing module 1101, a configurable lead compensation and output module 1102, and a delay compensation module 1103.

The user configuration parameter parsing module 1101 is configured to obtain a first delay time and a second delay time, and is configured to decompose the first delay time and the second delay time to obtain a nanosecond scale delay time corresponding to the first delay time and a picosecond scale delay time corresponding to the second delay time.

The configurable lead compensation and output module 1102 is configured to perform lead compensation for the nanosecond scale delay time to obtain the nanosecond scale lead compensation time. The configurable lead compensation and output module is composed of preset logic codes.

The delay compensation module 1103 is configured to perform lag compensation for the picosecond scale delay time to obtain a picosecond scale delay compensation time and to calculate a sum of the nanosecond scale lead compensation time and the picosecond scale delay compensation time to obtain a picosecond scale lead compensation time. The delay compensation module is configured to apply an interference signal on the CAN bus based on the picosecond scale lead compensation time. The delay compensation module is composed of a plurality of timing controllers connected in cascade, and the plurality of timing controllers are used to perform delay adjustment on the picosecond scale delay time.

For the specific working process of the above modules in the embodiment of the present disclosure, steps S301 to S305 in the embodiment of the method as recited above can be referred to, which will not be repeated here.

In an embodiment, the time compensation system for interference test equipment in another embodiment of the present disclosure is also used in the following aspects.

The user configuration parameter parsing module is configured to obtain a bus parameter on the CAN bus, and obtain a current acquired signal on the CAN bus at a current time based on the bus parameter.

The parsing module is configured to parse the current acquired signal to obtain an interference position of the current acquired signal on the CAN RX signal line.

The delay compensation module is configured to apply a target interference signal on the CAN bus based on the interference position.

In an embodiment, in the time compensation system for interference test equipment described in another embodiment of the present disclosure, the user configuration parameter parsing module is configured to obtain the current acquired signal on the CAN bus at the current time based on the bus parameter, which specifically includes:
extracting a baud rate and a sampling point of the CAN bus from the bus parameter;
searching for a basic parameter of CAN (FD) communication corresponding to the baud rate and the sampling point from a preset table; and
obtaining the current acquired signal at the current time from the CAN bus according to the basic parameter of CAN (FD) communication.

In an embodiment, the time compensation system for interference test equipment described in another embodiment of the present disclosure is also used in the following aspects.

The delay compensation module is configured to determine a delay compensation time of the CAN bus as a turned-on time of a transistor switch when the interference signal is at a high level.

The delay compensation module is configured to determine a delay compensation time of the CAN bus as a total delay time when the interference signal is at a low level. The total delay time refers to a sum of a delay time from a CAN PHY bus to a CAN RX signal line and a delay time from a CAN TX signal line to a CAN PHY bus.

The time compensation system for interference test equipment described in another embodiment of the present disclosure is also used in the following aspects.

The delay compensation module is configured to obtain a picosecond scale delay compensation time, and is configured to divide the picosecond scale delay compensation time equally according to a preset threshold, to obtain a plurality of divided delay times for transmission to a plurality of timing controllers.

The time compensation system for interference test equipment described in another embodiment of the present disclosure is also used in the following aspects.

The delay compensation module is configured to obtain a temperature and a voltage and a number of taps corresponding to the picosecond scale delay compensation time, and calibrate the temperature and voltage using an IDELAYCTRL unit in the delay compensation module, and adjust the number of taps corresponding to the picosecond scale delay compensation time based on the calibrated temperature and voltage, so that the delay time is the same for all timing controller units in the delay compensation module.

In the time compensation system for interference test equipment described in another embodiment of the present disclosure, lead compensation for the nanosecond scale delay time is performed by the configurable lead compensation and output module to obtain the nanosecond scale lead compensation time, which specifically includes:
obtaining a frequency of a system clock and a position on the CAN bus at a current time; and
performing a nanosecond beat for the nanosecond scale delay time by the configurable lead compensation and output module based on the frequency and position, to obtain a nanosecond scale lead compensation time.

In the time compensation system for interference test equipment described in another embodiment of the present disclosure, lag compensation for the picosecond scale delay time is performed by the delay compensation module to obtain the picosecond scale delay compensation time, which specifically includes:
obtaining a system clock, a nanosecond scale lead compensation time and a user configurable delay parameter;
calculating a picosecond scale delay value by using the user configurable delay parameter in a delay tap number allocation module of the delay compensation module; and
performing a picosecond adjustment on the picosecond scale delay time by each timing controller in the delay compensation module based on the system clock, the nanosecond scale lead compensation time and the picosecond scale delay value, to obtain the picosecond scale delay compensation time.

For the specific working process of the modules in the above embodiment of the present disclosure, the corresponding steps in the embodiment of the method as recited above may be referred to, which will not be repeated here.

The embodiments in the specification are described in a progressive manner. The same or similar parts between the embodiments may be referred to each other, and each embodiment emphasizes the differences from other embodiments. Particularly, since the system or system embodiments are basically similar to the method embodiments, the description of the system is simple and the related part may be referred to the description of the method embodiments. The system and system embodiments described above are schematic only, where the units described as separate components may or may not be physically separate, and the components shown as units may or may not be physical units, that is, they may be located in one place or distributed to multiple network units. Some or all of the modules may be selected according to the actual needs to realize the purpose of the embodiments. It can be understood and implemented without creative effort for those skilled in the art.

Those skilled in the art may also be aware that the units and algorithmic steps of the examples in the embodiments can be implemented in electronic hardware, computer software, or their combination. In order to clearly illustrate the interchangeability of hardware and software, components and steps of the embodiments have been described generally in terms of function in the above description. Whether these functions are performed in hardware or software depends on the specific application and design constraints of the technical solution. Those skilled in the art may use different methods to achieve the described functions for each particular application, but such implementations should not be considered beyond the scope of the present disclosure.

With the above description of the embodiments disclosed herein, those skilled in the art may implement or use the disclosure. Numerous modifications to these embodiments are apparent to those skilled in the art, and the general principle defined herein can be implemented in other embodiments without deviation from the spirit or scope of the disclosure. Therefore, the disclosure is not limited to the embodiments described herein, but is in accordance with a broadest scope consistent with the principle and novel features disclosed herein.

## Claims

1. A time compensation method for interference test equipment, comprising:
obtaining a first delay time and a second delay time;
decomposing the first delay time and the second delay time to obtain a nanosecond scale delay time corresponding to the first delay time and a picosecond scale delay time corresponding to the second delay time;
performing lead compensation for the nanosecond scale delay time by a configurable lead compensation and output module to obtain a nanosecond scale lead compensation time, wherein the configurable lead compensation and output module is composed of preset logic codes;
performing lag compensation for the picosecond scale delay time by a delay compensation module to obtain a picosecond scale delay compensation time, and calculating a sum of the nanosecond scale lead compensation time and the picosecond scale delay compensation time to obtain a picosecond scale lead compensation time, wherein the delay compensation module is composed of a plurality of timing controllers connected in cascade, and a delay adjustment on the picosecond scale delay time is performed using the plurality of timing controllers; and
applying an interference signal on a controller area network, CAN, bus based on the picosecond scale lead compensation time.

2. The method according to claim 1, further comprising:
obtaining a bus parameter on the CAN bus;
obtaining a current acquired signal on the CAN bus at a current time based on the bus parameter;
parsing the current acquired signal to obtain an interference position of the current acquired signal on a CAN Receive, RX, signal line; and
applying a target interference signal on the CAN bus according to the interference position.

3. The method according to claim 2, wherein the obtaining the current acquired signal on the CAN bus at the current time based on the bus parameter comprises:
extracting a baud rate and a sampling point of the CAN bus from the bus parameter;
searching for a basic parameter of CAN with Flexible Data rate, CAN FD, communication corresponding to the baud rate and the sampling point from a preset table; and
obtaining the current acquired signal at the current time from the CAN bus according to the basic parameter of CAN FD communication.

4. The method according to any of claims 1 to 3, wherein after the applying the interference signal on the CAN bus based on the picosecond scale lead compensation time, the method further comprises:
determining a turned-on time of a transistor switch as a delay compensation time of the CAN bus, when the interference signal is at a high level; and
determining a total delay time as a delay compensation time of the CAN bus, when the interference signal is at a low level, wherein the total delay time indicates a sum of a delay time from a CAN Physical layer, PHY, bus to a CAN RX signal line and a delay time from the CAN Transmit, TX, signal line to the CAN PHY bus.

5. The method according to claim 1, further comprising:
obtaining the picosecond scale delay compensation time; and
dividing equally the picosecond scale delay compensation time according to a preset threshold to obtain a plurality of divided delay times for transmission to the plurality of timing controllers.

6. The method according to claim 1, further comprising:
obtaining a temperature and a voltage, and a number of taps corresponding to the picosecond scale delay compensation time;
calibrating the temperature and the voltage by an IDELAYCTRL unit in the delay compensation module; and
adjusting the number of taps corresponding to the picosecond scale delay compensation time based on the calibrated temperature and voltage, in a way such that the delay time is the same for all timing controller units in the delay compensation module.

7. The method according to claim 1, wherein the performing the lead compensation for the nanosecond scale delay time by the configurable lead compensation and output module to obtain the nanosecond scale lead compensation time comprises:
obtaining a frequency of a system clock and a position on the CAN bus at a current time; and
performing a nanosecond beat for the nanosecond scale delay time by the configurable lead compensation and output module based on the frequency and the position, to obtain the nanosecond scale lead compensation time.

8. The method according to claim 1 or 7, wherein the performing the lag compensation for the picosecond scale delay time by the delay compensation module to obtain the picosecond scale delay compensation time comprises:
obtaining a system clock, a nanosecond scale lead compensation time and a user configurable delay parameter;
calculating a picosecond scale delay value by a delay tap number allocation module of the delay compensation module using the user configurable delay parameter; and
performing picosecond adjustment on the picosecond scale delay time by each timing controller in the delay compensation module based on the system clock, the nanosecond scale lead compensation time and the picosecond scale delay value, to obtain the picosecond scale delay compensation time.

9. A time compensation system for interference test equipment, comprising:
a user configuration parameter parsing module, configured to obtain a first delay time and a second delay time, and is configured to decompose the first delay time and the second delay time to obtain a nanosecond scale delay time corresponding to the first delay time and a picosecond scale delay time corresponding to the second delay time;
a configurable lead compensation and output module, configured to perform lead compensation for the nanosecond scale delay time to obtain a nanosecond scale lead compensation time, wherein the configurable lead compensation and output module is composed of preset logic codes; and
a delay compensation module, configured to perform lag compensation for the picosecond scale delay time to obtain a picosecond scale delay compensation time, calculate a sum of the nanosecond scale lead compensation time and the picosecond scale delay compensation time to obtain a picosecond scale lead compensation time, and apply an interference signal on a controller area network, CAN, bus based on the picosecond scale lead compensation time, wherein the delay compensation module is composed of a plurality of timing controllers connected in cascade, and a delay adjustment on the picosecond scale delay time is performed using the plurality of timing controllers; .

10. The system according to claim 9, wherein:
the user configuration parameter parsing module is configured to obtain a bus parameter on the CAN bus, and obtain a current acquired signal on the CAN bus at a current time based on the bus parameter;
the system further comprises a parsing module configured to parse the current acquired signal to obtain an interference position of the current acquired signal on a CAN Receive, RX, signal line; and
the delay compensation module is configured to apply a target interference signal on the CAN bus according to the interference position.
